## Europäisches Patentamt

## European Patent Office

## Office européen des brevets

(11) Numéro de publication: **0 426 522 A1**

# DEMANDE DE BREVET EUROPEEN

(21) Numéro de dépôt: 90402902.2

(22) Date de dépôt: 16.10.90

(51) Int. Cl.⁵: **B32B 27/08**, B65D 65/40

(30) Priorité: 31.10.89 FR 8914296

(43) Date de publication de la demande:
08.05.91 Bulletin 91/19

(84) Etats contractants désignés:
AT BE CH DE DK ES FR GB GR IT LI LU NL SE

(71) Demandeur: ONO Société dite:
Boîte postale 7
F-28700 Auneau(FR)

(72) Inventeur: Flork, Jean-Louis
56, rue du Prieuré St-Thomas
F-28230 Epernon(FR)

(74) Mandataire: Varady, Peter et al
Cabinet Lavoix 2, Place d'Estienne d'Orves
F-75441 Paris Cedex 09(FR)

(54) Structure multicouche pour le conditionnement de produits sensibles à l'oxygène.

(57) Cette structure multicouche à base d'une couche de polymère barrière à l'humidité et d'une couche de polymère barrière à l'oxygène dont la perméabilité à l'oxygène est fonction de l'humidité, séparées éventuellement par une couche de liaison, est caractérisée selon l'invention en ce que la couche de polymère barrière à l'oxygène se trouve à l'extérieur de la structure.
Conditionnement d'aliments.

EP 0 426 522 A1

La présente invention a pour objet une structure multicouche polymère pour le conditionnement de produits sensibles à l'oxygène tels que des aliments, produits pharmaceutiques.

L'invention s'applique en particulier à des structures comprenant une couche polymère barrière à l'oxygène destinée à protéger le produit sensible à l'oxygène pendant toute la durée de vie du conditionnement. Etant donné que les polymères couramment employés pour assurer cette barrière à l'oxygène, notamment les alcools polyvinyliques (PVOH) et les copolymères d'alcool vinylique et d'éthylène (EVOH) sont sensibles à l'humidité, on les protège par des couches barrières à l'humidité, notamment des polyoléfines ou du polychlorure de vinyle, généralement par l'intermédiaire de couches adhésives (GB-A-1 384 791). Toutefois ces couches protectrices n'empêchent pas complètement le passage de l'humidité dans les cas d'entreposage dans l'air humide et surtout de stérilisation, ce qui entraîne la perte des propriétés de la couche barrière à l'oxygène telle que l'EVOH au fur et à mesure que l'humidité relative argumente.

Pour remédier à cet inconvénient, selon EP-A-0 059 274 on a proposé l'introduction d'un agent dessicant dans la structure multicouche, notamment dans les couches d'adhésifs entourant la barrière à l'oxygène. Cependant, lors de la stérilisation (en général à 121°C environ pour les produits alimentaires) le passage de l'oxygène à travers la structure multicouche est assez important car, d'une part, la perméabilité de l'EVOH est non seulement fonction de l'humidité mais aussi de la température et, d'autre part, le passage de la vapeur d'eau peut entraîner la saturation de l'agent dessicant qui devient ainsi inefficace. De plus, après la stérilisation, l'élimination de l'eau retenue par la couche d'EVOH est d'autant plus lente que la paroi extérieure de la structure est imperméable à l'eau.

La présente invention permet de réduire l'effet de cette perte d'imperméabilité à l'oxygène pendant la vie du conditionnement en positionnant la couche sensible à l'humidité de telle sorte qu'elle soit au niveau d'humidité relative le plus bas possible et le plus vite possible à partir de la naissance du conditionnement. La solution selon l'invention consiste à placer la couche barrière à l'oxygène à l'extérieur de la structure multicouche, notamment sur la paroi externe du conditionnement dans le cas où le produit conditionné contient de l'eau.

L'invention a donc pour objet une structure multicouche pour le conditionnement de produits sensibles à l'oxygène, notamment d'aliments, comprenant une couche de polymère barrière à l'humidité et une couche de polymère barrière à l'oxygène dont la perméabilité à l'oxygène est fonction de l'humidité, les deux couches étant éventuellement liées par une couche adhésive, caractérisée en ce que la couche de polymère barrière à l'oxygène se trouve à l'extérieur de la structure.

L'invention est particulièrement intéressante dans le cas où la couche "barrière à l'oxygène" est à base d'EVOH, ou consiste en EVOH.

La couche "barrière à l'humidité" peut être notamment en une polyoléfine, ou tout autre polymère habituellement utilisé dans l'emballage alimentaire, pharmaceutique ou médical, en particulier un polymère coextrudable.

Selon une variante, la structure multicouche selon l'invention peut comprendre deux ou plus de deux couches barrières à l'oxygène successives, notamment EVOH, liées éventuellement par des couches adhésives.

Ainsi, alors que les structures selon l'état de la technique sont du type :
A/adhésif/EVOH/adhésif/B
où A, B et les adhésifs sont des polymères barrières à l'humidité pour protéger l'EVOH de l'humidité, l'invention consiste à avoir la structure :
A/adhésif/EVOH

A étant le polymère barrière à l'humidité, notamment une polyoléfine, par exemple du polypropylène, qui est en contact avec le produit conditionné lorsque celui-ci contient de l'eau, ce qui est notamment le cas de la plupart des aliments (leur humidité relative variant de 60 à 100%). Dans ce cas l'EVOH est en contact avec l'air ambiant qui se trouve à un niveau plus bas d'humidité.

L'invention peut être expliquée comme suit.

Dans le cas d'un conditionnement fermé selon l'état de la technique on a le schéma suivant :
aliment/A/adhésif/EVOH/adhésif/B/air extérieur.

Dans une telle structure, à l'équilibre, l'humidité de l'EVOH -donc sa performance comme barrière à l'oxygène- est telle qu'elle est comprise entre l'humidité de l'aliment et l'humidité de l'air ambiant, mais toujours supérieure à l'humidité de l'air.

En mettant la couche d'EVOH à l'extérieur selon l'invention, son humidité est égale à l'humidité de l'air donc à l'humidité la plus basse possible au lieu où est stocké le conditionnement et par conséquent l'EVOH a la performance maximum en ce qui con cerne son efficacité en tant que barrière à l'oxygène.

La structure multicouche selon l'invention peut être réalisée de manière connue, notamment par coextrusion des polymères forment chacune des couches (par ex. par filière plate), par extrusion-soufflage, par injection-soufflage, etc.

L'exemple suivant illustre l'invention.

EXEMPLE

On produit par extrusion une structure multicouche PP/adhésif/EVOH sous forme d'une feuille rigide de 1,2 mm d'épaisseur ayant la composition suivante :

|  |  | épaisseur de couche |
| --- | --- | --- |
| PP (homopolymère transparent de la société Amoco).... | 4% | 48 µm |
| PP (idem, avec +5% de pigment blanc TiO₂) .... | 90,5% | 1086 µm |
| Adhésif PP homopolymère greffé (Bynel$^R$ de la société Du Pont de Nemours) .... | 2,5% | 30 µm |
| EVOH (Selar$^R$ de la société Du Pont de Nemours).... | 3% | 36 µm |

On réalise avec cette feuille des barquettes (138mm X 138mm x 33mm, poids 20g environ) par thermoformage au moyen d'une machine RDM37.10 de la société ILLIG.

On remplit les barquettes avec de l'eau froide puis les munit d'opercules non pelables (en Alu/laque), et on les scelle à 220°C pendant 2s. à 6 bars (0,6 MPa). On place les barquettes dans un autoclave et on les y maintient à 121°C durant 30 mn avec une contre-pression de 2 bars (0,2 MPa), puis on re froidit par injection d'eau froide dans l'autoclave. Ensuite on les stocke à 23°C et 50% d'humidité relative (HR).

On ouvre les barquettes après un laps de temps de 1 à 30 jours après l'étape de stérilisation et on réalise une mesure de la perméabilité de la barquette à chaque ouverture.

La perméabilité à l'oxygène est mesurée avec un appareil de type Oxtran selon la norme ASTM D 3985, à 30°C et 65-70% HR. A tire d'exemple on a mesuré une perméabilité de 0,022 cm³ O₂/24 h après 1 jour, 0,023 cm³ O₂/24 h après 7 jours et 0,018 cm³ O₂/24 h après 28 jours.

A titre de comparaison, on a effectué les mêmes essais avec la structure multicouche précédente mais placée à l'envers (EVOH à l'intérieur de la barquette, en contact avec l'eau) et avec une structure multicouche du commerce : PP/Adhésif/EVOH/Adhésif/PP ayant la même épaisseur totale et la même épaisseur de la couche EVOH que les structures précédentes. Les résultats des mesures sont reportés sur le graphique annexé. (On a mesuré une perméabilité avec l'EVOH à l'intérieur en contact avec l'eau de 0,038cm³ O₂/24h après 7 jours; 0,19cm³ O₂/24h après 14 jours; 0,19cm³ O₂/24h après 28 jours). On constate que :

- pour la structure selon l'invention (courbe 1), bien que la couche d'EVOH ait été chargée d'eau pendant le début de la stérilisation, elle la perd aussitôt que l'air devient sec, et cet effet est encore amplifié à la sortie de l'autoclave;

- pour la structure connue (courbe 2), bien que la couche d'EVOH soit séparée de l'eau par la couche barrière à l'humidité (PP), elle est chargée d'eau qui reste en quelque sorte emprisonnée dans la structure plusieurs jours après la stérilisation, ce qui entraîne la perte de la capacité de barrière à l'oxygène; et

- pour la structure à l'envers (courbe 3), la couche d'EVOH en contact avec l'eau absorbe de l'eau pendant la stérilisation (sans être saturée), et après elle continue à se charger d'eau en perdant ainsi son effet barrière à l'oxygène.

L'invention s'applique aux structures multicouches comprenant au moins une couche d'EVOH ou tout produit similaire barrière à l'oxygène et sensible à l'humidité, et au moins une couche d'un autre polymère extrudable tel que le polyéthylène, le polypropylène, le polystyrène, le polytéréphtalate d'éthylène (PET), le polychlorure de vinyle (PCV), le polycarbonate (PC), etc.. .

L'efficacité barrière à l'oxygène de l'EVOH situé en couche externe peut être renforcée ou sécurisée par une ou plusieurs couches d'EVOH supplémentaires, par exemple une structure du type : PP/Adhésif/EVOH/Adhésif/EVOH.

Il est à noter que l'EVOH en position extérieure apporte les autres avantages suivants :

- un effet antistatique

- un aspect brillant

- un contrôle plus aisé de sa présence

(son absence par une éventuelle rayure pourrait être révélée par une coloration de l'adhésif).

EP 0 426 522 A1

La structure multicouche selon l'invention, sous forme rigide ou semi-rigide, peut être avantageusement utilisée pour la fabrication de récipients divers tels que barquettes, pots, tubes, notamment scellables.

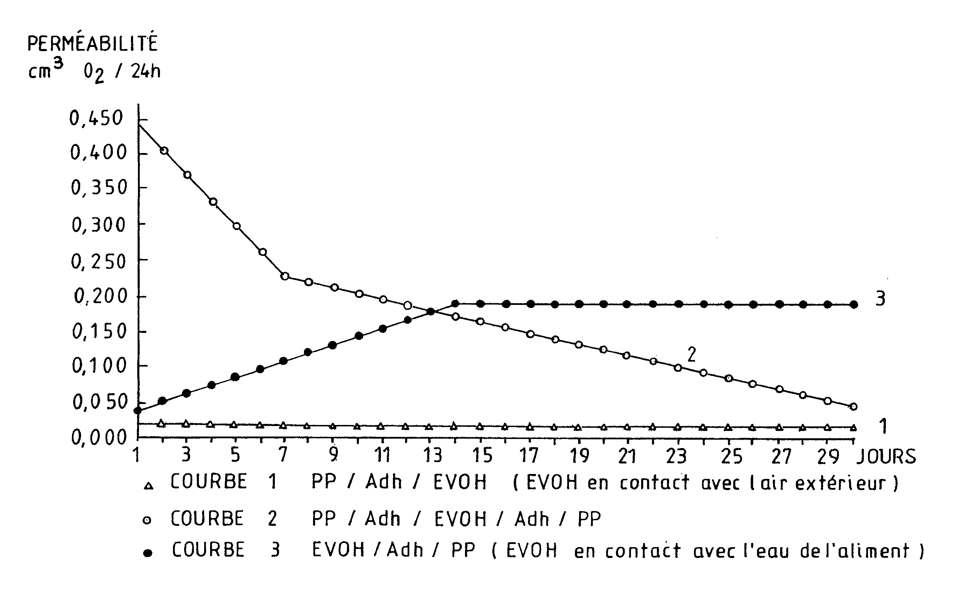

**Revendications**

1. Structure multicouche pour le conditionnement de produits sensibles à l'oxygène, notamment d'aliments, comprenant une couche de polymère barrière à l'humidité et une couche de polymère barrière à l'oxygène dont la perméabilité à l'oxygène est fonction de l'humidité, les deux couches étant éventuellement liées par une couche adhésive, caractérisée en ce que la couche de polymère barrière à l'oxygène se trouve à l'extérieur de la structure.

2. Structure multicouche selon la revendication 1, caractérisée en ce que la couche de polymère barrière à l'oxygène est à base d'EVOH.

3. Structure multicouche selon la revendication 2, caractérisée en ce que la couche de polymère barrière à l'oxygène consiste en EVOH.

4. Structure multicouche selon l'une quelconque des revendications 1 à 3, caractérisée en ce qu'elle comprend deux ou plus de deux couches barrières à l'oxygène successives, liées éventuellement par des couches adhésives.

5. Structure multicouche selon l'une quelconque des revendications 1 à 4, caractérisée en ce que la couche barrière à l'humidité est une polyoléfine.

6. Structure multicouche selon la revendication 5, caractérisée en ce que la polyoléfine est du polypropylène.

7. Structure multicouche selon l'une des revendications 1 à 4, caractérisée en ce que la couche barrière à l'humidité est un polytérephtalate d'éthylène ou un polychlorure de vinyle.

8. Conditionnement comprenant une paroi en une structure multicouche selon l'une quelconque des revendications 1 à 7.

4

PERMÉABILITÉ
$cm^3$ $O_2$ / 24h

COURBE 1 PP / Adh / EVOH ( EVOH en contact avec l'air extérieur )

COURBE 2 PP / Adh / EVOH / Adh / PP

COURBE 3 EVOH / Adh / PP ( EVOH en contact avec l'eau de l'aliment )

EP 0 426 522 A1

**Office européen
des brevets**

**RAPPORT DE RECHERCHE
EUROPEENNE**

Numéro de la demande

**EP 90 40 2902**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 309 095   (DU PONT)<br>* Revendications 15,19; page 5, lignes 23-44; page 3, lignes 54-57 * | 1-3,8 | B 32<br>B 27/08<br>B 65 D 65/40 |
| | — — — | | |
| X | FR-A-2 361 223   (TOYO SEIKAN KAISHA LTD)<br>* Page 7, lignes 10-16; page 9, lignes 9-16; page 12, lignes 9-11,21 * | 1-3,5,6 | |
| | — — — | | |
| X | EP-A-0 322 891   (KURARAY CO., LTD)<br>* Abrégé; colonne 4, lignes 34-54; colonne 11, lignes 30-50 * | 1,2,4-8 | |
| | — — — | | |
| A | DE-A-3 504 349   (NORTHERN PETROCHEMICAL CO.)<br>* Revndication 1; page 5, lignes 17-31 * | 1-3,5,6 | |
| | — — — | | |
| A | FR-A-2 302 933   (TOYO SEIKAN KAISHA LTD)<br>* Page 10, lignes 22-37 * | 1-3,5,6 | |
| | — — — | | |
| A | EP-A-0 207 440   (KURARAY CO., LTD)<br>* Revendications 1,4,5; page 6, lignes 14-20 * | 1,2,5-8 | |
| | — — — | | |
| A | FR-A-2 182 164   (W.R. GRACE)<br>* Page 1, ligne 11 - page 2, ligne 4 * | 1-3,5-8 | **DOMAINES TECHNIQUES RECHERCHES (Int. Cl.5)** |
| | — — — — — | | B 32 B |

Le présent rapport de recherche a été établi pour toutes les revendications

| Lieu de la recherche | Date d'achèvement de la recherche | Examinateur |
|---|---|---|
| La Haye | 14 janvier 91 | MCCONNELL C.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

\& : membre de la même famille, document correspondant